# EUROPÄISCHE PATENTANMELDUNG

(11) **EP 3 257 569 A1**
(43) Veröffentlichungstag der Anmeldung: **20.12.2017**
(21) Anmeldenummer: 16174306.7
(22) Anmeldetag: 14.06.2016
(51) Int. Cl.: B01D 53/26, B01D 53/28, C10L 3/10

(54) **VERFAHREN ZUR ENTFEUCHTUNG VON FEUCHTEN GASGEMISCHEN**

(71) Anmelder: Evonik Degussa GmbH, 45128 Essen (DE)
(72) Erfinder: IRFAN, Muhammad, 63526 Erlensee (DE); ROLKER, Jörn, 63755 Alzenau (DE); SEILER, Matthias, 40627 Düsseldorf-Unterbach (DE); SCHNEIDER, Rolf, 63584 Gründau-Rothenbergen (DE); ZEHNACKER, Olivier, 44263 Dortmund (DE); SCHNEIDER, Marc-Christoph, 58285 Gevelsberg (DE)

(57) **Zusammenfassung**

Die Erfindung betrifft ein Verfahren zur Entfeuchtung eines feuchten Gasgemisches. Die Erfindung betrifft auch eine Vorrichtung zur Entfeuchtung eines feuchten Gasgemisches sowie deren Verwendung im erfindungsgemäßen Verfahren.

## Beschreibung

Die Erfindung betrifft ein Verfahren zur Entfeuchtung eines feuchten Gasgemisches.

### Hintergrund der Erfindung

Die Entfeuchtung feuchter Gasgemische ist in einer Vielzahl technischer Gebiete notwendig.

So muss bei der Belüftung und Klimatisierung von Gebäuden oder Fahrzeugen die Luft in der Regel nicht nur gekühlt, sondern auch entfeuchtet werden, da die zu kühlende Luft oft eine so hohe Luftfeuchtigkeit aufweist, dass beim Kühlen auf die gewünschte Temperatur der Taupunkt unterschritten wird. In konventionellen Klimaanlagen entfällt deshalb ein großer Teil des Stromverbrauchs auf die Entfeuchtung der Luft.

Um den Stromverbrauch von Klimaanlagen für Gebäude zu senken, wird die Luft durch Adsorption oder Absorption von Wasser mit einem Trocknungsmedium entfeuchtet und im Anschluss das mit Wasser beladenen Trocknungsmediums durch Erhitzen auf eine Temperatur, bei der das Wasser wieder desorbiert wird, regeneriert. Eine Absorption in einem flüssigen Absorptionsmedium hat dabei gegenüber einer Adsorption an einem festen Absorbens den Vorteil, dass die Lufttrocknung apparativ einfacher und mit weniger Trocknungsmedium durchgeführt werden kann und dass die Regenerierung des mit Wasser beladenen Trocknungsmediums einfacher mit Solarwärme durchgeführt werden kann.

Ein weiteres technisches Gebiet, auf dem die Entfeuchtung feuchter Gasgemische zur Anwendung kommt, ist der Bereich der Absorptionskältemaschinen (Prinzip beschrieben in WO 2014/079675 A1). Hier entsteht das feuchte Gasgemisch bei der Verdampfung von Wasser unter niedrigem Druck. Der so entstehende Wasserdampf muss dem feuchten Gasgemisch entzogen werden, damit es dann wieder der Wasserverdampfung zugeführt werden und einen neuen Zyklus durchlaufen kann. Auch hier ist die Absorption in einem flüssigen Absorptionsmedium der in einem festen Absorptionsmedium überlegen.

Zur Absorption von Feuchtigkeit mit Hilfe ionischer Flüssigkeiten werden im Stand der Technik eine Reihe von ionischen Flüssigkeiten vorgeschlagen. So nennt die DE 10 2010 004 779 A1 beispielsweise 1-Ethyl-3-methylimidazoliumethylsulfat, 1-Ethyl-3-methylimidazoliummethylsulfat, 1-Ethyl-3-methylimidazoliumdiethylphosphat, 1-Ethyl-3-methylimidazoliummethylsulfonat, 1-Butyl-3-methylimidazoliumbistrifluormethansulfonimid, 1-Butyl-3-ethylimidazoliumchlorid.

Die US 2013/0031930 A1 und die US 2013/0031931 A1 beschreiben Kombinationen dieser Substanzen mit Lithiumsalzen.

Die CN 102335545 A beschreibt eine Reihe von auf Alkylphosphaten basierenden ionischen Flüssigkeiten, nämlich unter anderem 1,3-Dimethyimidazoliumdimethylphosphat, 1-Ethyl-3-methylimidazoliumdimethylphosphat und 1-Butyl-3-methylimidazoliumdimethylphosphat.

In Y. Luo et al., Appl. Thermal Eng. 31 (2011) 2772-2777 wird vorgeschlagen, an Stelle einer wässrigen Lösungen von Lithiumbromid die ionische Flüssigkeit 1-Ethyl-3-methylimidazoliumtetrafluoroborat zur Lufttrocknung einzusetzen. Diese ionische Flüssigkeit weist aber den Nachteil einer nur schlechten Absorptionsfähigkeit auf.

In Y. Luo et al., Solar Energy 86 (2012) 2718-2724 wird für die Lufttrocknung als Alternative zu 1-Ethyl-3-methylimidazoliumtetrafluoroborat die ionische Flüssigkeit 1,3-Dimethyimidazoliumacetat vorgeschlagen. Die Acetate werden auch von M. Kanakubo et al., J. Mol. Liq. 217 (2016) 112 - 119 diskutiert.

Die US 2011/0247494 A1 schlägt eine weitere ionische Flüssigkeit, nämlich 1-Ethyl-3-methylimidazoliumacetat, zu diesem Zweck vor.

Die Anwendung dieser ionischen Flüssigkeiten in Absorptionskältemaschinen wird auch in der WO 2013/050242 A1 diskutiert.

Neben der Anwendung in Absorptionskältemaschinen gibt es allerdings noch ein weiteres Gebiet, in welchem die Trocknung von Gasströmen nötig ist. Dies ist die Erdgasraffination, die andere Anforderungen an die dafür zu verwendende ionische Flüssigkeiten stellt.

Während in Absorptionskältemaschinen die Entfeuchtung des Gasstromes üblicherweise bei Temperaturen von nicht mehr als 20 °C stattfindet, weist der in der Raffination von Erdgas anfallende feuchte Gasstrom oft eine Temperatur von 30 °C oder mehr auf. Die hinsichtlich der Absorptionskältemaschinen festgestellten Vorteile bestimmter ionischer Flüssigkeiten sind deshalb nicht auf das Gebiet der Erdgasentfeuchtung bzw. allgemeiner der Entfeuchtung von Gasen mit hoher Temperatur übertragbar.

Die Aufgabe der vorliegenden Erfindungen bestand deshalb darin, ein Absorptionsmittel zur Verfügung zu stellen, mit dem feuchte Gasströme mit einer Temperatur ≥ 30 °C besonders effizient entfeuchtet werden können.

Somit stellte sich die Aufgabe, Absorptionsmedien mit noch besseren Absorptionseigenschaften zur Verfügung zu stellen.

Es wurde nun überraschend ein Absorptionsmedium gefunden, das diese Aufgabe löst.

### Detaillierte Beschreibung der Erfindung

Die vorliegende Erfindung betrifft demnach ein Verfahren zur Entfeuchtung eines feuchten Gasgemisches **G,** insbesondere von feuchtem Erdgas, wobei das feuchte Gasgemisch **G** mit einem flüssigen Absorptionsmedium **A₁,** welches mindestens ein Salz ausgewählt aus der Gruppe bestehend aus 1,3-Diethylimidazoliumpropionat (im Folgenden "EEIM Prop"), 1,3-Dimethylimidazoliumpropionat (im Folgenden "MMIM Prop"), 1-Ethyl-3-methylimidazoliumproprionat (im Folgenden "EMIM Prop") umfasst, kontaktiert wird, und wobei das Gasgemisch **G** eine Temperatur von 30 °C bis 100 °C aufweist, wodurch ein Gasgemisch **G₂,** welches einen gegenüber dem feuchten Gasgemisch **G** niedrigeren Wassergehalt aufweist, und ein flüssiges Absorptionsmedium **A₂,** welches einen gegenüber dem flüssigen Absorptionsmedium **A₁** erhöhten Wassergehalt aufweist, erhalten werden.

In einer alternativen Ausführungsform des erfindungsgemäßen Verfahrens kann das flüssige Absorptionsmedium **A₁** anstatt dem vorbeschriebenen Salz auch Methansulfonsäure aufweisen.

In einer weiteren alternativen Ausführungsform kann das flüssige Absorptionsmedium **A₁** anstatt dem vorbeschriebenen Salz auch die aus der US 2013/0031930 A1 und der US 2013/0031931 A1 bekannten Absorptionsmedien aufweisen, also eine Mischung aus einem Lithiumsalz Li⁺A⁻ und einem organischen Salz Q⁺A⁻, wobei das Lithiumsalz und das organische Salz das gleiche Kation A umfassen, und wobei A eine molare Masse von höchsten 200 g/mol aufweist und im Falle dass es sich bei A um ein Halogenid handelt, dieses Chlorid ist, und wobei Q⁺ eine molare Masse von höchsten 200 g/mol aufweist.

In dieser weiteren alternativen Ausführungsform ist A insbesondere ausgewählt aus der Gruppe bestehend aus Chlorid, Nitrat, Formiat, Acetat, Cyanat, Sulfat, Methylsulfat, Carbonat, Oxalat, Succinat, Methylphosphat, Dimethylphosphat, Hydrogenphosphat, Dihydrogenphosphat.

In dieser weiteren alternativen Ausführungsform ist Q⁺ insbesondere ein 1,3-Dialkylimidazoliumion, ein 1,3-Dialkylimidazoliniumion, ein N-Alkylpyridiniumion, ein N,N-Dialkylpyrrolidiniumion oder ein Ammoniumion der Struktur R¹R²R³R⁴N ist, wobei R¹, R², R³ unabhängig voneinander ausgewählt sind aus Wasserstoff, Alkyl, Hydroxyethyl und R⁴ ein Alkylrest ist.

In dieser weiteren alternativen Ausführungsform enthält bevorzugt die Mischung aus einem Lithiumsalz Li⁺A⁻ und einem organischen Salz Q⁺A⁻ das Lithiumsalz und das organische Salz Q⁺A⁻ in einem molaren Verhältnis, für das der Schmelzpunkt der Mischung niedriger ist als die Schmelzpunkte der Komponenten Lithiumsalz und organisches Salz Q⁺A⁻.

Es ist jedoch am bevorzugtesten im erfindungsgemäßen Verfahren, dass das flüssige Absorptionsmedium **A₁,** ein Salz ausgewählt aus der Gruppe bestehend aus 1,3-Diethylimidazoliumpropionat, 1,3-Dimethylimidazoliumpropionat, 1-Ethyl-3-methylimidazoliumproprionat umfasst.

Insbesondere umfasst das Salz im erfindungsgemäßen Verfahren MMIM Prop.

Das im Verfahren eingesetzte feuchte Gasgemisch **G** weist eine Temperatur von 30 °C bis 100 °C, bevorzugt 30 °C bis 60 °C, bevorzugter 30 °C bis 50 °C, noch bevorzugter 30 °C bis 40 °C auf und ist ansonsten nicht besonders beschränkt. Da die Absorptionsfähigkeit jedoch in diesem Temperaturbereich so gut ist, eignet sich das erfindungsgemäße Verfahren besonders gut zur Entfeuchtung von Erdgas, bei dessen Verarbeitung dieses oft in diesem Temperaturbereich anfällt.

Bevorzugt hat in dem erfindungsgemäßen Verfahren auch das Absorptionsmedium **A₁** eine Temperatur von 30 °C bis 100 °C, bevorzugt 30 °C bis 60 °C, bevorzugter 30 °C bis 50 °C, noch bevorzugter 30 °C bis 40 °C. Eine höhere Temperatur als 100 °C führt zu einer zu starken Zersetzung des Absorptionsmediums **A₁** und sollte deshalb nicht eingestellt werden.

"Feucht" bedeutet im Sinne der Erfindung "umfassend Wasser, insbesondere Wasserdampf". "Entfeuchtung" bedeutet mindestens teilweise Entfernung von Wasser.

"Mindestens teilweise" bedeutet im Sinne der Erfindung "teilweise oder vollständig".

"Feuchtes Gasgemisch **G"** bedeutet demnach im Sinne der Erfindung, dass das Gasgemisch **G** Wasser, bevorzugt Wasserdampf ("Wasserdampf" bedeutet Wasser im gasförmigen Aggregatszustand), umfasst und seine Zusammensetzung im Übrigen nicht besonders beschränkt ist. Der Wassergehalt des feuchten Gasgemisches ist dabei nicht besonders beschränkt und liegt insbesondere bei 0.01 Vol.-% - 99.99 Vol.-% ("Vol.-%" gibt das Volumen des Wasserdampfes bezogen auf das Gesamtvolumen des feuchten Gasgemisches **G** an). Das feuchte Gasgemisch **G** ist insbesondere ausgewählt aus feuchtem Erdgas. Bei feuchtem Erdgas liegt der Wassergehalt insbesondere bei 0.01 Vol.-% bis 15.00 Vol.-%, bevorzugt 0.1 Vol.-% bis 5 Vol.-%.

Das erfindungsgemäße Verfahren kann beispielsweise in einer dem Fachmann geläufigen Wasserabsorptionseinheit durchgeführt werden. Als Wasserabsorptionseinheit **W_{abs1}** können dabei insbesondere die dem Fachmann bekannten Wasserabsorber eingesetzt werden. Sie beruhen auf dem Prinzip, dass bei der Absorption des Wassers die Oberfläche des flüssigen Absorptionsmediums **A₁** vergrößert wird und gleichzeitig eine möglichst große Verweilzeit des flüssigen Absorptionsmediums **A₁** im Wasserabsorber erreicht wird. Insbesondere können hier Wasserabsorber ausgewählt aus der folgenden Gruppe eingesetzt werden: Festbett ("*packed beds*"), Sprühkolonne (*"spray columns"),* Fallfilmapparate (*"falling-films*"), Blasensäule (*"bubble columns"),* Kolonnen mit mehreren Böden (*"tray column"),* Nasswäscher (zum Beispiel *"Venturi scrubbers"),* Mischbehälter (*"stirred tank"*) und Kombinationen dieser Absorber. Besonders bevorzugt werden als Wasserabsorber Fallfilmapparate, insbesondere Rohrbündelfallfilmapparate, eingesetzt. Die Wasserabsorptionseinheit **W_{abs1}** kann insbesondere auch einen zusätzlichen Wärmetauscher **W_{z1}** umfassen, der so eingerichtet ist, dass das flüssige Absorptionsmedium **A₁** auf die gewünschte Temperatur einstellbar ist.

In einer Wasserdesorptionseinheit **W_{des1},** welche einen Wärmetauscher **Wₓ₁** umfasst, kann dem mit Wasser beladenen flüssigen Absorptionsmedium **A₂** dann wieder selbiges entzogen werden. Die Wasserdesorptionseinheit **W_{des1}** beruht auf dem Prinzip, dass dem mit Wasser beladenen flüssigen Absorptionsmediums **A₂** Wärme zugeführt wird, die Oberfläche des mit Wasser beladenen flüssigen Absorptionsmediums **A₁** vergrößert wird und gleichzeitig eine möglichst große Verweilzeit des mit Wasser beladenen flüssigen Absorptionsmediums **A₂** in der Wasserdesorptionseinheit erreicht wird.

Als Wasserdesorptionseinheit **W_{des1},** welchen einen Wärmetauscher **Wₓ₁** umfasst, können dabei insbesondere die dem Fachmann bekannten Kombinationen aus Wärmetauscher und Wasserdesorber eingesetzt werden, insbesondere Sprühverdampfer (*"horizontal tube evaporator"*) mit vorgeschaltetem Wärmetauscher, insbesondere Rohrbündelwärmetauscher (*"shell and tube"*), Plattenwärmetauscher (*"plate and frame"*)*.* Daneben kann die Wasserdesorptionseinheit **W_{des1},** welchen einen Wärmetauscher **Wₓ₁** umfasst, auch ein Wasserdesorber mit integriertem Wärmetauscher sein. Solche Wasserdesorber mit integriertem Wärmetauscher sind insbesondere Kletterfilmverdampfer, Fallfilmverdampfer (*"long-tube vertical"*), Robert-Verdampfer (*"short-tube vertical"*), Zwangsumlaufverdampfer *("forced circulation"*)*,* Dünnschichtverdampfer (*"agitated thin film"*)*.* Besonders bevorzugt werden als Wasserdesorptionseinheit **W_{des1}** Fallfilmapparate, insbesondere Rohrbündelfallfilmapparate, eingesetzt.

Im Umlauf **U₁** wird insbesondere das mit Wasser beladene flüssige Absorptionsmedium **A₂** von der Wasserabsorptionseinheit **W_{abs1}** zu der Wasserdesorptionseinheit **W_{des1}** geführt und noch bevorzugter - dies insbesondere dann, wenn das erfindungsgemäße Verfahren kontinuierlich durchgeführt wird - flüssiges Absorptionsmittel von der Wasserdesorptionseinheit **W_{des1}** zu der Wasserabsorptionseinheit **W_{abs1}** geführt.

Als Umlauf **U₁** wird insbesondere eine Leitung, insbesondere ausgewählt aus der Gruppe bestehend aus Rohr, Schlauch, eingesetzt.

In einer weiteren bevorzugten Ausführungsform weist der Umlauf **U₁** auch eine Pumpe auf.

Im erfindungsgemäßen Verfahren wird das feuchte Gasgemisch **G** mit einem flüssigen Absorptionsmedium **A₁,** welches mindestens ein Salz ausgewählt aus der Gruppe bestehend aus EEIM Prop, MMIM Prop, EMIM Prop, bevorzugt MMIM Prop, umfasst, kontaktiert. Das Kontaktieren kann auf jede dem Fachmann bekannte Art und Weise erfolgen, insbesondere in einer Wasserabsorptionseinheit **W_{abs1}.** Durch das Kontaktieren absorbiert das Absorptionsmedium **A₁** mindestens teilweise Feuchtigkeit, also Wasser, aus dem feuchten Gasstrom **G.**

Die Temperatur des Absorptionsmediums **A₁** beim Kontaktieren des feuchten Gasgemisches **G** liegt dabei bevorzugt im Bereich 30 °C bis 100 °C, bevorzugt 30 °C bis 60 °C, bevorzugter 30 °C bis 50 °C, noch bevorzugter 30 °C bis 40 °C.

Das Absorptionsmedium **A₁** umfasst besonders bevorzugt mindestens ein Salz ausgewählt aus der Gruppe bestehend aus 1,3-Diethylimidazoliumpropionat, 1,3-Dimethylimidazoliumpropionat, 1-Ethyl-3-methylimidazoliumproprionat, bevorzugt umfasst es 1,3-Dimethylimidazoliumpropionat. Deren Synthese ist dem Fachmann bekannt (WO 2013/050242 A1).

Das flüssige Absorptionsmedium **A₁** kann dabei in Form des reinen Salzes eingesetzt werden. Alternativ und bevorzugter ist das flüssige Absorptionsmedium **A₁** eine wässrige Lösung, in welcher das Gesamtgewicht aller Salze ausgewählt aus der Gruppe bestehend aus 1,3-Diethylimidazoliumpropionat, 1,3-Dimethylimidazoliumpropionat, 1-Ethyl-3-methylimidazoliumproprionat mindestens 70 Gew.-%, bezogen auf das Gesamtgewicht der wässrigen Lösung, beträgt, noch bevorzugter mindestens 80 Gew.-%, bezogen auf das Gesamtgewicht der wässrigen Lösung, noch bevorzugter 85 Gew.-%, noch bevorzugter 90 Gew.-%, noch mehr bevorzugter 99 Gew.-%.

Das im erfindungsgemäßen Verfahren erhaltene Gasgemisch **G₂,** welches einen gegenüber dem feuchten Gasgemisch **G** niedrigeren Wassergehalt aufweist, stellt dann den entfeuchteten Gasstrom dar, welcher z.B. im Falle von entfeuchtetem Erdgas der Energiegewinnung zugeführt werden kann.

Das im erfindungsgemäßen Verfahren erhaltene flüssige Absorptionsmedium **A₂,** weist einen gegenüber dem flüssigen Absorptionsmedium **A₁** erhöhten Wassergehalt auf. Es versteht sich von selbst, dass in der besonders bevorzugten Ausführungsform des erfindungsgemäßen Verfahrens **A₂** hinsichtlich der von ihm umfassten Salze ausgewählt aus der Gruppe bestehend aus bestehend aus 1,3-Diethylimidazoliumpropionat, 1,3-Dimethylimidazoliumpropionat, 1-Ethyl-3-methylimidazoliumproprionat identisch mit **A₁** ist und sich bevorzugt nur im Wassergehalt von diesem unterscheidet.

In einer bevorzugten Ausführungsform des erfindungsgemäßen Verfahrens erfolgt in einem weiteren Schritt ["optionaler Schritt b)", wobei das erfindungsgemäße Verfahren in diesem Sinne als "Schritt a)" zu verstehen ist] dann die mindestens teilweise Entfernung von Wasser aus dem flüssigen Absorptionsmedium **A₂,** wodurch ein flüssiges Absorptionsmedium **A₃,** welches einen gegenüber dem flüssigen Absorptionsmedium **A₂** niedrigeren Wassergehalt aufweist, erhalten wird. Dabei wird dem flüssigen Absorptionsmedium **A₂** zusätzlich Wärme zugeführt. Die Zuführung der Wärme und die mindestens teilweise Entfernung kann auf jeder dem Fachmann bekannte Art und Weise erfolgen, insbesondere in einer Wasserdesorptionseinheit **W_{des1}** umfassend einen Wärmetauscher **Wₓ₁.** Durch die mindestens teilweise Entfernung von Wasser aus dem flüssigen Absorptionsmedium **A₂** wird ein flüssiges Absorptionsmedium **A₃,** welches einen gegenüber dem flüssigen Absorptionsmedium **A₂** niedrigeren Wassergehalt aufweist, erhalten.

Es versteht sich von selbst, dass in der besonders bevorzugten Ausführungsform des erfindungsgemäßen Verfahrens das flüssige Absorptionsmedium **A₃** hinsichtlich der von ihm umfassten Salze ausgewählt aus der Gruppe bestehend aus bestehend aus 1,3-Diethylimidazoliumpropionat, 1,3-Dimethylimidazoliumpropionat, 1-Ethyl-3-methylimidazoliumproprionat identisch mit dem flüssigen Absorptionsmedium **A₂** ist und sich bevorzugt nur im Wassergehalt von diesem unterscheidet.

In einer weiteren bevorzugten Ausführungsform wird das erfindungsgemäße Verfahren kontinuierlich durchgeführt. Dies bedeutet insbesondere, dass im Anschluss an Schritt b) mindestens ein weiteres Mal die Schritte a) und b) durchlaufen werden, und es sich bei den jeweils zusätzlich durchlaufenen Schritten a) eingesetzten flüssigen Absorptionsmedium **A₁** mindestens teilweise um das flüssige Absorptionsmedium **A₃,** welches aus dem unmittelbar vorher durchlaufenen Schritt b) erhalten wurde, handelt, das heißt dass insbesondere der Wassergehalt von den im jeweils zusätzlich durchlaufenen Schritt a) eingesetzten flüssigen Absorptionsmedium **A₁** und dem flüssigen Absorptionsmedium **A₃** aus dem unmittelbar vorher durchlaufenen Schritt b) gleich ist.

Noch bevorzugter wird in dieser Ausführungsform flüssiges Absorptionsmedium **A₂** mit Wärme von flüssigem Absorptionsmedium **A₃,** beaufschlagt. Dies kann in einem zusätzlichen Wärmetauscher **W_{y1}** durchgeführt werden, insbesondere ausgewählt aus der Gruppe bestehend aus Rohrbündelwärmetauscher (*"shell and tube"),* Plattenwärmetauscher (*"plate and frame"*)*.* Dies ermöglicht eine besonders energieeffiziente Durchführung des erfindungsgemäßen Verfahrens.

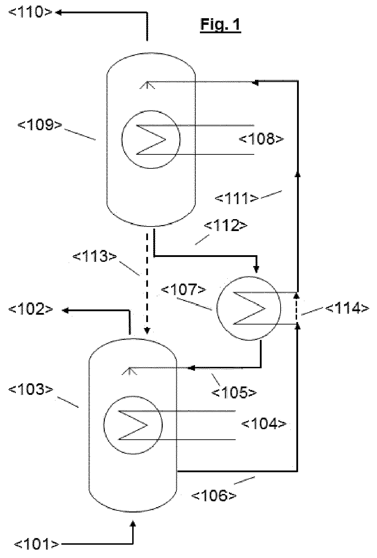

In der Figur 1 (abgekürzt als "Fig. 1") ist eine Ausführungsform des erfindungsgemäßen Verfahrens beispielhaft wiedergegeben.

Die in Figur 1 dargestellte Vorrichtung **V₁** umfasst eine Wasserabsorptionseinheit **W_{abs1}** <103> (mit optionalem zusätzlichen Wärmetauscher **W_{z1}** <104>) in welche eine Leitung <101> mündet und von welcher eine Leitung <102> wegführt, eine Wasserdesorptionseinheit **W_{des1},** welche einen Wärmetauscher **Wₓ₁** <108> und einen Wasserdesorber <109> aufweist, und in die Leitung <111> mündet und von der Leitungen <110>, <112> und <113> wegführen, und einen Umlauf **U₂,** welcher aus den Leitungen <106>, <111> und <113> bzw. <106>, <111>, <112> und <105> (bzw. auch jeweils mit Leitung <114>) gebildet wird. Daneben kann die Vorrichtung in Figur 1 auch optional einen weiteren Wärmetauscher **W_{y1}** <107> umfassen, in den die Leitungen <106> und <112> münden und von dem die Leitungen <105> und <111> wegführen. Zusätzlich umfasst die Vorrichtung **V₁** auch ein flüssiges Absorptionsmedium **A₁.** Dieses befindet sich in einer oder mehreren der vorgenannten Komponenten Wasserabsorptionseinheit **W_{abs1},** Wasserdesorptionseinheit **W_{des1},** Umlauf **U₁.** Die Wasserabsorptionseinheit **W_{abs1}** <103> kann optional auch einen zusätzlichen Wärmetauscher **W_{z1}** <104> aufweisen, mit dem das flüssige Absorptionsmedium **A₁** auf eine Temperatur von 30 °C bis 100 °C, bevorzugt 30 °C bis 60 °C, bevorzugter 30 °C bis 50 °C, noch bevorzugter 30 °C bis 40 °C gebracht werden kann. Optional kann der Umlauf **U₂** auch zusätzlich eine Pumpe zur Beförderung des flüssigen Absorptionsmediums **A₁** aufweisen.

Das erfindungsgemäße Verfahren wird nun beispielhaft mit Bezug auf Vorrichtung **V₁** anhand der Figur 1 beschrieben:
Ein Strom feuchten Gasgemisches G mit einer Temperatur von 30 °C bis 100 °C (zum Beispiel feuchtes Erdgas) wird über Leitung <101> einer Wasserabsorptionseinheit **W_{abs1}** <103> zugeführt und dort mit dem flüssigen Absorptionsmedium **A₁,** welches der Wasserabsorptionseinheit **W_{abs1}** <103> über die Leitung <105> oder über die Leitung <113> zugeführt wird, kontaktiert. Die Wasserabsorptionseinheit **W_{abs1}** <103> kann jede der oben für **W_{abs1}** angegebenen Wasserabsorber sein, insbesondere ein Fallfilmapparat. Durch Kontaktieren des über Leitung <101> zugeführten Gasgemisches G in der Wasserabsorptionseinheit **W_{abs1}** <103> mit dem flüssigen Absorptionsmedium **A₁,** welches über die Leitung <105> oder über die Leitung <113> zugeführt wird, werden ein flüssiges Absorptionsmedium **A₂,** welches einen gegenüber dem flüssigen Absorptionsmedium **A₁** erhöhten Wassergehalt aufweist, und ein Strom eines Gasgemischs **G₂,** der über die Leitung <102> abgeleitet wird, wobei **G₂** einen gegenüber dem feuchten Gasgemisch G niedrigeren Wassergehalt aufweist, erhalten. Bei **G₂** handelt es sich je nach Anwendung insbesondere um entfeuchtetes Erdgas. Die Wasserabsorptionseinheit **W_{abs1}** <103> kann optional auch einen zusätzlichen Wärmetauscher **W_{z1}** <104> aufweisen, mit dem das flüssige Absorptionsmedium **A₁** auf eine Temperatur von 30 °C bis 100 °C, bevorzugt 30 °C bis 60 °C, bevorzugter 30 °C bis 50 °C, noch bevorzugter 30 °C bis 40 °C gebracht werden kann. Bevorzugt über die Leitungen <106>, <111> und den Wärmetauscher **W_{y1}** <107> (oder, falls der Wärmetauscher **W_{y1}** <107> nicht eingesetzt wird, über die Leitungen <106>, <111> und <114>) wird dann das flüssige Absorptionsmedium **A₂** zur Wasserdesorptionseinheit **W_{des1}** geführt, die aus dem Wärmetauscher **Wₓ₁** <108> und dem Wasserdesorber <109> besteht. Im optionalen Wärmetauscher **W_{y1}** <107> kann das mit Wasser beladene flüssige Absorptionsmedium **A₂** zusätzlich mit Wärme beaufschlagt werden. Im Wasserdesorber <109> findet dann die mindestens teilweise Entfernung von Wasser aus dem flüssigen Absorptionsmedium **A₂** statt, wodurch ein flüssiges Absorptionsmedium **A₃,** welches einen gegenüber dem flüssigen Absorptionsmedium **A₂** niedrigeren Wassergehalt aufweist, erhalten wird. Das abgetrennte Wasser wird dann flüssig oder als Dampf, bevorzugt als Dampf, über eine Leitung <110> aus dem Wasserdesorber <109> abgeleitet. Das flüssige Absorptionsmedium **A₃** wird dann aus dem Wasserdesorber <109> abgeleitet und der Wasserabsorptionseinheit **W_{abs1}** <103> wieder zugeführt. Dies kann entweder direkt passieren, das heißt über die in Figur 1 gestrichelt eingezeichnete Leitung <113>. Alternativ und bevorzugt kann das flüssige Absorptionsmedium **A₃** auch über die Leitung <112> dem optionalen Wärmetauscher **W_{y1}** <107> zugeführt werden, in welchem dann eine Beaufschlagung des über Leitung <106> dem optionalen Wärmetauscher **W_{y1}** <107> zugeführten, flüssigen Absorptionsmediums **A₂** mit Wärme aus dem über Leitung <112> dem optionalen Wärmetauscher **W_{y1}** <107> zugeführten flüssigen Absorptionsmediums **A₃** erfolgt. Nach Zuführung des konzentrierten flüssigen Absorptionsmediums **A₃** in die Wasserabsorptionseinheit **W_{abs1}** über Leitung <105> oder <113> wird dieses erneut als **A₁** zur mindestens teilweisen Entfeuchtung des Gasstroms in einem neuen Zyklus eingesetzt.

Die nachfolgenden Beispiele sollen die vorliegende Erfindung erläutern, ohne diese in irgendeiner Form zu beschränken.

### Beispiele

In einem 30 mL-Glasgefäß wurden 5 mL einer Lösung von Triethylenglykol ("TEG"; CAS-Nummer: 112-27-6; Vergleichsbeispiele **V1, V5, V8**), 1,3-Dimethylimidazoliumacetat ("MMIM Ac"; Vergleichsbeispiele **V2, V6, V9**), 1-Ethyl-3-methylimidazoliumacetat ("EMIM Ac"; Vergleichsbeispiele **V3, V7, V10**) und 1,3-Dimethylimidazoliumpropionat ("MMIM Prop", Vergleichsbeispiel **V4,** erfinderische Beispiele **E1, E2**) vorgelegt. Alle Testsubstanzen sind gemäß der WO 2013/050242 A1 herstellbar. Die Reinheit der vermessenen Absorptionsmedien betrug jeweils ∼ 99 %.

Im Falle der Beispiele **V1, V2, V3, V4,** war das Glasgefäß auf 20 °C temperiert, im Falle der Beispiele **V5, V6, V7, E1** war das Glasgefäß per Wasserbad auf 30 °C temperiert, im Falle der Beispiele **V8, V9, V10, E2** auf 40 °C.

Das Glasgefäß war durch einen Deckel mit eingebautem Hygrometer (Firma Testo), welches die Feuchtigkeit der Luft über dem Absorptionsmedium im Glasgefäß konstant ermittelte, luftdicht verschlossen.

Nach Verschließen des Deckels wurde das zu testende Absorptionsmedium im Glasgefäß für eine gewisse Zeit stehen gelassen und die Veränderung der Feuchte der Luft im Glasgefäß über dem Absorptionsmittel konstant gemessen.

Es wurde beobachtet, dass für alle Absorptionsmedien die Feuchtigkeit der Luft im Glasgefäß von einem für die Raumluft typischen Wert (∼ 50 %) absank und spätestens nach ∼ 90 Minuten einen Gleichgewichtswert einnahm. Dieser jeweils ermittelte Gleichgewichtswert (gibt die Luftfeuchtigkeit in % an) ist in der nachfolgenden Tabelle dargestellt.

| Beispiel | Temperatur | Absorptionsmedium | Gleichgewichtswert in % |
|---|---|---|---|
| **V1** | 20 °C | TEG | 7.0 |
| **V2** | | MMIM Ac | 0.8 |
| **V3** | | EMIM Ac | 3.8 |
| **V4** | | MMIM Prop | 1.8 |
| **V5** | 30 °C | TEG | 7.9 |
| **V6** | | MMIM Ac | 6.1 |
| **V7** | | EMIM Ac | 5.0 |
| **E1** | | MMIM Prop | 2.4 |
| **V8** | 40 °C | TEG | 8.1 |
| **V9** | | MMIM Ac | 7.2 |
| **V10** | | EMIM Ac | 6.5 |
| **E2** | | MMIM Prop | 4.2 |

Aus den Ergebnissen ist Folgendes ersichtlich:
1) In den Beispielen **V1** bis **V4** ist das aus der Literatur bekannte MMIM Ac das Absorptionsmedium, welches die größte Verringerung der Feuchte der Luft gewährleistet. Bei dieser Temperatur ist dieses Medium mit einem Gleichgewichtswert von 0.8 % **(V2)** allen anderen Medien, darunter auch dem erfindungsgemäßen MMIM Prop **(V4)** überlegen.
2) Dieser Trend kehrt sich überraschenderweise jedoch bei Temperaturen ≥ 30 °C um: wie aus den erfinderischen Beispielen **E1** und **E2** im Vergleich mit **V5** bis **V7** bzw. **V8** bis **V10** ersichtlich, zeigt bei 30 °C und 40 °C das MMIM Prop die beste Verringerung der Luftfeuchtigkeit.
3) Daraus folgt, dass bei Temperaturen ≥ 30 °C MMIM Prop und ähnliche ionische Flüssigkeiten wie EEIM Prop und EMIM Prop eine überraschend gute Entfeuchtungsaktivität aufweisen.

## Patentansprüche

1. Verfahren zur Entfeuchtung eines feuchten Gasgemisches **G,** wobei das feuchte Gasgemisch **G** mit einem flüssigen Absorptionsmedium **A₁,** welches mindestens
(a) ein Salz ausgewählt aus der Gruppe bestehend aus 1,3-Diethylimidazoliumpropionat, 1,3-Dimethylimidazoliumpropionat, 1-Ethyl-3-methylimidazoliumproprionat umfasst, oder
(b) Methansulfonsäure umfasst, oder
(c) eine Mischung aus einem Lithiumsalz Li⁺A⁻ und einem organischen Salz Q⁺A⁻ umfasst, wobei das Lithiumsalz und das organische Salz das gleiche Kation A umfassen,
und wobei A eine molare Masse von höchsten 200 g/mol aufweist und im Falle dass es sich bei A um ein Halogenid handelt, dieses Chlorid ist,
und wobei Q⁺ eine molare Masse von höchsten 200 g/mol aufweist,
kontaktiert wird, und wobei das Gasgemisch **G** eine Temperatur von 30 °C bis 100 °C aufweist,
wodurch ein Gasgemisch **G₂,** welches einen gegenüber dem feuchten Gasgemisch **G** niedrigeren Wassergehalt aufweist, und ein flüssiges Absorptionsmedium **A₂,** welches einen gegenüber dem flüssigen Absorptionsmedium **A₁** erhöhten Wassergehalt aufweist, erhalten werden.

2. Verfahren nach Anspruch 1, wobei das flüssige Absorptionsmedium **A₁,** ein Salz ausgewählt aus der Gruppe bestehend aus 1,3-Diethylimidazoliumpropionat, 1,3-Dimethylimidazoliumpropionat, 1-Ethyl-3-methylimidazoliumproprionat umfasst.

3. Verfahren nach Anspruch 1, wobei das Salz 1,3-Dimethylimidazoliumpropionat ist.

4. Verfahren nach einem der Ansprüche 1 bis 3, wobei die Temperatur des Absorptionsmediums **A₁** beim Kontaktieren des feuchten Gasgemisches **G** im Bereich 30 °C bis 100 °C liegt.

5. Verfahren nach einem der Ansprüche 1 bis 4, wobei das flüssige Absorptionsmedium **A₁** eine wässrige Lösung ist, in welcher das Gesamtgewicht aller Salze ausgewählt aus der Gruppe bestehend aus 1,3-Diethylimidazoliumpropionat, 1,3-Dimethylimidazoliumpropionat, 1-Ethyl-3-methylimidazoliumproprionat mindestens 70 Gew.-%, bezogen auf das Gesamtgewicht der wässrigen Lösung, beträgt.

6. Verfahren nach einem der Ansprüche 1 bis 5, wobei es kontinuierlich durchgeführt wird.

7. Verfahren nach Anspruch 1, wobei das flüssige Absorptionsmedium **A₁** eine Mischung aus einem Lithiumsalz Li⁺A⁻ und einem organischen Salz Q⁺A⁻ umfasst.

8. Verfahren nach Anspruch 7, wobei A ausgewählt aus der Gruppe bestehend aus Chlorid, Nitrat, Formiat, Acetat, Cyanat, Sulfat, Methylsulfat, Carbonat, Oxalat, Succinat, Methylphosphat, Dimethylphosphat, Hydrogenphosphat, Dihydrogenphosphat ist.

9. Verfahren nach Anspruch 7 oder 8, wobei Q⁺ ein 1,3-Dialkylimidazoliumion, ein 1,3-Dialkylimidazoliniumion, ein N-Alkylpyridiniumion, ein N,N-Dialkylpyrrolidiniumion oder ein Ammoniumion der Struktur R¹R²R³R⁴N ist, wobei R¹, R², R³ unabhängig voneinander ausgewählt sind aus Wasserstoff, Alkyl, Hydroxyethyl und R⁴ ein Alkylrest ist.

10. Verfahren nach einem der Ansprüche 7 bis 9, wobei die Mischung aus einem Lithiumsalz Li⁺A⁻ und einem organischen Salz Q⁺A⁻ das Lithiumsalz und das organische Salz Q⁺A⁻ in einem molaren Verhältnis enthält, für das der Schmelzpunkt der Mischung niedriger ist als die Schmelzpunkte der Komponenten Lithiumsalz und organisches Salz Q⁺A⁻.
